# EUROPÄISCHE PATENTSCHRIFT

(11) **EP 3 739 737 B1**
(45) Veröffentlichungstag und Bekanntmachung des Hinweises auf die Patenterteilung: **07.12.2022**
(21) Anmeldenummer: 20158488.5
(22) Anmeldetag: 20.02.2020
(51) Int. Cl.: H02M 1/12, H02M 1/32

(54) **HOCHFREQUENZ-NETZFILTER**
HIGH FREQUENCY LINE FILTER
FILTRE SECTEUR HAUTE FRÉQUENCE

(30) Priorität: 14.05.2019 DE 102019112598
(43) Veröffentlichungstag der Anmeldung: 18.11.2020
(73) Patentinhaber: Dr. Johannes Heidenhain GmbH, 83301 Traunreut (DE)
(72) Erfinder: HEINRICH, Simon, 83278 Traunstein (DE); GRAMSAMER, Franz, 83413 Fridolfing (DE)

(56) Entgegenhaltungen:
- US-A1- 2013 057 297
- US-A1- 2016 164 448
- AKAGI H ET AL: "A passive EMI filter for an adjustable-speed motor driven by a 400-V three-level diode-clamped inverter", POWER ELECTRONICS SPECIALISTS CONFERENCE, 2004. PESC 04. 2004 IEEE 35TH ANNUAL, AACHEN, GERMANY 20-25 JUNE 2004, PISCATAWAY, NJ, USA,IEEE, US, 20. Juni 2004 (2004-06-20), Seiten 86-93Vol.1, XP010737973, DOI: 10.1109/PESC.2004.1355719 ISBN: 978-0-7803-8399-9

## Beschreibung

Diese Schrift betrifft Ausführungsformen eines Hochfrequenz-Netzfilters für einen an ein Versorgungsnetz angeschlossenen Umrichter sowie Ausführungsformen eines Umrichterverbands mit einem Hochfrequenz-Netzfilter und einem Umrichter.

Umrichter wandeln ein Eingangssignal auf Basis einer leistungselektronischen Schaltung in ein Ausgangssignal. Die leistungselektronische Schaltung umfasst einen oder mehrere Leistungshalbleiterschalter, wie einen MOSFET oder einen IGBT, der mit einer Schaltfrequenz betrieben wird, die im Bereich einiger kHz liegen kann.

Umrichter, beispielsweise Wechselrichter oder Gleichrichter, können einerseits an das öffentliche Versorgungsnetz angekoppelt sein, und die Netzspannung - ggf. nach vorheriger Filterung oder passiver Gleichrichtung - dann weiteren Komponenten, wie einem weiteren Umrichter und/oder einer Last, wie einen Motor, bereitstellen. Einige Umrichter sind darüber hinaus ausgebildet, nicht nur Energie aus dem Versorgungsnetz zu beziehen und an eine Last weiterzuleiten, sondern auch Energie, beispielsweise überschüssige Bremsenergie eines Motors, in das Versorgungsnetz zurück zu speisen. Derartige Umrichter werden als rückspeisefähige Umrichter bezeichnet.

Häufig werden zur Dämpfung von Störsignalen, z.B. zur Einhaltung von Grenzwerten für Abstrahlungs- und Funkstörspannungsmessungen, Filter vorgesehen, die an der Anschlussstrecke zwischen dem Versorgungsnetz und dem Umrichter angekoppelt sein können oder im Umrichter selbst integriert sind. Derartige Filter sind häufig passiv ausgebildet, und umfassen typischerweise ein Netzwerk aus passiven Komponenten wie Kondensatoren, Spulen und Widerständen. Die Störsignale können dabei insbesondere aufgrund des hochfrequenten Betriebs der Leistungshalbleiterschalter des Umrichters entstehen.

Ein vorbekanntes Filter der vorstehenden Art ist beispielsweise in der EP 1 069 673 B1 für ein dreiphasiges Gerät beschrieben. Das Filter umfasst ein Netzwerk aus Kondensatoren und Spulen, welches einerseits die Netzanschlüsse und andererseits die Phaseneingänge des Geräts sowohl an einen Masseanschluss als auch an einen Neutralleiter koppelt. Dieses Netzwerk befindet sich somit zwischen den Netzanschlüssen und den Phaseneingängen des Geräts. Das Filter heißt daher auch Netzfilter.

Die DE 10 2007 022 503 A1 zeigt ein weiteres Beispiel für ein Netzfilter für einen Umrichter zum Anschluss des Umrichters an ein dreiphasiges Spannungsnetz. Die US 2013/057297 A1 zeigt einen Umrichter mit einem Netzfilter, dessen Kondensatoren aus mehreren Teilkapazitäten aufgebaut sein können.

Aufgabe der vorliegenden Erfindung ist es, ein Filter für einen Umrichter vorzuschlagen, das kostengünstig hergestellt werden kann und bei kompakter Bauweise vorteilhafte Filtereigenschaften zeigt.

Aufgabe der vorliegenden Erfindung ist es weiter, einen Umrichterverband mit einem in entsprechender Weise verbesserten Filter vorzuschlagen.

Hiervon ausgehend wird der Gegenstand des unabhängigen Anspruchs vorgeschlagen. Merkmale einiger Ausführungsbeispiele sind in den Unteransprüchen angegeben.

Gemäß einem ersten Aspekt wird ein Hochfrequenz-Netzfilter für einen Umrichter gemäß Anspruch 1 vorgeschlagen.

Einen weiteren Aspekt bildet ein Umrichterverband, der einen Umrichter und ein an diesen angeschlossenes Hochfrequenz-Netzfilter gemäß dem ersten oder zweiten Aspekt umfasst.

Der Umrichter des Umrichterverbands ist z.B. ein Gleichrichter oder ein Wechselrichter oder eine Kombination davon, der das ein- oder mehrphasige Wechselsignal empfängt und in eine Ausgangsgleichspannung bzw. in eine Ausgangswechselspannung für eine Last wandelt. Dabei kann der Umrichter als rückspeisefähiger Umrichter ausgebildet sein; d.h., der Umrichter ist ausgebildet, ihm von außerhalb des Spannungsnetzes her zugeführte Energie (beispielsweise überschüssige Bremsenergie einer Last in Gestalt eines Motors) in das Spannungsnetz einzuspeisen. Gemäß einer weiteren Ausführungsform ist der Umrichter als Netzumrichter ausgebildet; d.h., der Umrichter wandelt ihm zugeführte Energie, die beispielsweise von einem Windkraftgenerator oder einem Photovoltaikmodul oder einer sonstigen Quelle bereitgestellt wird, in ein ein- oder mehrphasiges Wechselsignal und speist dieses über die Phasenanschlüsse in das Spannungsnetz ein.

Nachstehend wird auf alle vorstehend genannten Aspekte Bezug genommen werden.

Durch die Verwendung von sowohl Y-Kondensatoren als auch impulsfesten Kondensatoren können zum einen eine Isolierung des Umrichters überbrückt werden und zum anderen mit einer Frequenz entsprechend der Schaltfrequenz des Umrichters periodisch wiederkehrende Rechteckimpulse gefiltert werden.

Für die Überbrückung einer Isolierung sind insbesondere die Y-Kondensatoren zugelassen, die jedoch derartige Rechteckimpulse, wie sie für Umrichter typisch sind, gewöhnlich nicht tolerieren. Aus diesem Grund ist in jedem der Filterpfade in Serie zu der Parallelschaltung aus den wenigstens zwei Y-Kondensatoren der impulsfeste Kondensator vorgesehen. Durch die Parallelschaltung von zwei Y-Kondensatoren, die jeweils die gleiche Kapazität aufweisen können, wird der durch den impulsfesten Kondensator fließende Strom für die Y-Kondensatoren zumindest halbiert.

Die Bezeichnung "Y-Kondensator" wird vorliegend gemäß ihrer üblichen Bedeutung verwendet. Y-Kondensatoren sind demnach z.B. Kondensatoren entsprechend der IEC 60384-14 Norm. Y-Kondensatoren werden danach zwischen der Phase (bzw. einem Neutralleiter) und einem berührbaren, schutzgeerdeten Gehäuse angeschlossen und überrücken somit eine Basisisolierung, beispielsweise indem sie eine doppelte oder eine verstärkte Isolierung überbrücken. Als Y-Kondensatoren gelten nach dieser Norm nur solche Kondensatoren, die bei begrenzter Kapazität eine überprüfbare erhöhte elektrische und mechanische Sicherheit aufweisen. Betreibt man beispielsweise Y-Kondensatoren innerhalb ihrer Spezifikation, so ist gewährleistet, dass sie bei Bauteilversagen den sicheren, offenen Zustand einnehmen.

Die Bezeichnung "impulsfester Kondensator" wird vorliegend ebenfalls entsprechend ihrer üblichen Bedeutung verwendet. Anders als bei Y-Kondensatoren ist bei impulsfesten Kondensatoren beispielsweise durch eine entsprechend ausgestaltete Verbindung zwischen einem Elektrodenbelag und einer Schoopschicht eine hohe Strom- bzw. Impulsbelastbarkeit sichergestellt. Impulsfeste Kondensatoren sind üblicherweise nicht zur Überbrückung von Isolierungen zugelassen. Beispielhafte impulsfeste Kondensatoren sind die handelsüblichen Impulskondensatoren von WIMA (https://www.wima.de/de/produkte/impulskondensatoren/).

Das Hochfrequenz-Netzfilter ist mit seinen Filterpfaden nach einer Ausführungsform direkt an die Phasenanschlüsse des Umrichters und somit "nah" an selbigen angeschlossen. Z.B. stehen die Filterpfade in Kontakt mit den Phasenanschlüssen des Umrichters, und sind nicht etwa über weitere elektrische/elektronische Komponenten an diese Phasenanschlüsse gekoppelt.

Wie einleitend schon ausgeführt worden ist, kann der Umrichter auf Basis von leistungselektronischen Halbleiterschaltern bei hohen Schaltfrequenzen betrieben werden, die im Bereich einiger Kilohertz und auch darüber liegen können.

Der Umrichter ist gemäß einer Ausführungsform ein Hochsetzsteller, der das z.B. dreiphasige Wechselsignal aus dem z.B. ebenfalls dreiphasigen Spannungsnetz (hier auch als Versorgungsnetz bezeichnet) in ein Ausgangssignal in Gestalt einer Ausgangsgleichspannung wandelt. Diese Ausgangsgleichspannung kann dann einem Gleichspannungszwischenkreis zugeführt sein, dem ein weiterer Umrichter, wie ein Wechselrichter, nachgeschaltet sein kann, der diese Gleichspannung des Gleichspannungszwischenkreises in eine Wechselspannung für eine Last, beispielsweise einen Motor, wandelt.

Der Umrichter ist gemäß einer Ausführungsform rückspeisefähig, was bedeutet, dass der Umrichter überschüssige Energie in das dreiphasige Spannungsnetz speist.

Auf die einleitenden Ausführungen zur bespielhaften Ausbildungen des Umrichters wird hier Bezug genommen. Das hier beschriebene Hochfrequenz-Netzfilter ist somit auf keine bestimmten Umrichtertypen beschränkt. Jedenfalls ist der Umrichter an das Spannungsnetz gekoppelt und umfasst zur Erfüllung seiner Umrichterfunktion, also seiner Wandlungsfunktion, mindestens einen Schalter, z.B. einen Leistungshalbleiterschalter, der mit einer Schaltfrequenz betrieben wird, die deutlich über der Netzfrequenz (z.B. 50 Hz) liegt, beispielsweise im Bereich einiger kHz. Dieser hochfrequente Schaltbetrieb des Umrichters sowie seine Kopplung an das Spannungsnetz erfordert das Hochfrequenz-Netzfilter.

Gemäß einer Ausführungsform ist das Hochfrequenz-Netzfilter außerhalb des Gehäuses des Umrichters vorgesehen und überbrückt, insbesondere mit den Y-Kondensatoren, die Isolierung des Umrichters. Gemäß einer anderen Ausführungsform ist das Hochfrequenz-Netzfilter im Umrichter integriert. Gemäß einer noch weiteren Ausführungsform ist das Hochfrequenz-Netzfilter teilweise im Umrichter integriert, und teilweise außerhalb des Umrichters angeordnet.

Das Wechselsignal wird von dem Versorgungsnetz an entsprechenden Netzanschlüssen bereitgestellt. Bevor es von den Phasenanschlüssen des Umrichters empfangen wird, durchläuft es typischerweise zunächst ein Netzfilter und/oder einen Kommutierungskreis. Gleiches gilt entsprechend für ein Wechselsignal, das von dem Umrichter in das Versorgungsnetz eingespeist wird; dieses durchläuft somit z.B. zunächst den Kommutierungskreis und sodann das Netzfilter, bevor es über die Netzanschlüsse in das Versorgungsnetz gelangt.

Durch die Filterpfade ist jeder der Phasenanschlüsse des Umrichters auf Masse geschaltet.

Zur Reduzierung des Stroms in den Y-Kondensatoren können in den Parallelschaltungen der Filterpfade auch mehr als jeweils zwei Y-Kondensatoren vorgesehen werden.

Alle Y-Kondensatoren haben beispielsweise dieselbe Kapazität. Diese Kapazität liegt beispielsweise im Bereich von 1 nF bis 10 nF, oder im Bereich von 2 nF bis 5 nF.

Auch die impulsfesten Kondensatoren in den Filterpfaden können jeweils dieselbe Kapazität aufweisen. Diese Kapazität liegt beispielsweise im Bereich von 1 nF bis 10 nF, oder im Bereich von 1 nF bis 4 nF.

Gemäß einer weiteren Ausführungsform weist jeder der Filterpfade einen ohmschen Dämpfungswiderstand mit einem Widerstandswert von 1 bis 10 Ohm, oder von 2 bis 8 Ohm oder von 3 bis 7 Ohm auf. Der Dämpfungswiderstand ist in Serie zu den impulsfesten Kondensator geschaltet. Nach einer Ausführungsform ist in jedem der Filterpfade der ohmsche Dämpfungswiderstand zwischen dem betreffenden Phasenanschluss des Umrichters und dem impulsfesten Kondensator geschaltet.

Das Hochfrequenz-Netzfilter kann zur Erfüllung von Schutzvorschriften außerdem Entladewiderstände aufweisen. Beispielsweise ist in jedem der Filterpfade ein zu den mindestens zwei Y-Kondensatoren parallelgeschalteter erster ohmscher Entladewiderstand vorgesehen. Darüber hinaus kann in jedem der Filterpfade ein zweiter ohmscher Entladewiderstand vorgesehen sein, der parallel zu dem jeweiligen impulsfesten Kondensator geschaltet ist.

Der Umrichter bildet einen Sternpunkt aus (der nicht identisch ist mit einem Sternpunkt, der eventuell von einem dem Umrichter nachgeschalteten Motor ausgebildet wird). Das Hochfrequenz-Netzfilter umfasst einen vierten Filterpfad, der eine leitfähige Verbindung zwischen diesen vom Umrichter ausgebildeten Sternpunkt und dem Masseanschluss ausbildet. Dieser vierte Filterpfad umfasst eine Serienschaltung aus einem ohmschen Dämpfungswiderstand und einer Parallelschaltung von mindestens zwei Y-Kondensatoren. In dem vierten Filterpfad ist also ein impulsfester Kondensator nicht zwingend erforderlich, was darin begründet liegt, dass die störenden Impulse am Sternpunkt typischerweise eine niedrigere Amplitude aufweisen als jene an den Phasenanschlüssen. Zur Erfüllung von Schutzvorschriften kann den mindestens zwei Y-Kondensatoren im vierten Filterpfad ebenfalls ein Entladewiderstand parallelgeschaltet sein.

Nach einer bevorzugten Ausführungsform umfasst das Hochfrequenz-Netzfilter keine verschalteten Induktivitäten. Aufgrund der räumlichen Ausdehnung des Hochfrequenz-Netzfilters weist dieses unvermeidbar eine geringere Streuinduktivität auf; es sind bei dieser Ausführungsform jedoch keine Induktivitäten in Gestalt von diskreten Bauelementen in dem Hochfrequenz-Netzfilter verschaltet.

Der Umrichterverband des dritten Aspektes der vorliegenden Erfindung umfasst neben dem Umrichter und das an diesen angeschlossenen Hochfrequenz-Netzfilter nach einer Ausführungsform ein Netzfilter, das eine Kopplung zwischen dem Spannungsnetz und den drei Phasenanschlüssen des Umrichters ausbildet. An diese Kopplung kann weiter beteiligt sein ein induktiver Kommutierungskreis, der zwischen dem Netzfilter und den drei Phasenanschlüssen des Umrichters angeschlossen ist. Eine derartige Konfiguration zeigt beispielsweise die eingangs bereits genannte Offenlegungsschrift DE 10 2007 022 503 A1,

Der von dem Umrichter ausgebildete Sternpunkt ist beispielsweise an das Netzfilter zurückgeführt. Weiter sind sowohl das Netzfilter als auch der Umrichter an denselben Masseanschluss angeschlossen. Der Umrichter ist dabei, wie vorstehend ausgeführt worden ist, über das Hochfrequenz-Netzfilter an den Masseanschluss angeschlossen.

Weitere Einzelheiten und Vorteile der Erfindung werden bei der nachfolgenden Beschreibung einiger Ausführungsbeispiele anhand der Figuren deutlich werden.

Es zeigen:
- Fig. 1: exemplarisch und schematisch ein Blockschaltbild eines Umrichterverbands;
- Fig. 2: exemplarisch und schematisch ein Blockschaltbild eines Umrichterverbands gemäß einer oder mehreren Ausführungsformen;
- Fig. 3: exemplarisch und schematisch ein Blockschaltbild eines Hochfrequenz-Netzfilters gemäß einer oder mehreren Ausführungsformen;
- Fig. 4: exemplarisch und schematisch einen Filterpfad eines Hochfrequenz-Netzfilters gemäß einer oder mehreren Ausführungsformen; und
- Fig. 5: exemplarisch und schematisch einen weiteren Filterpfad eines Hochfrequenz-Netzfilters gemäß einer oder mehreren Ausführungsformen.

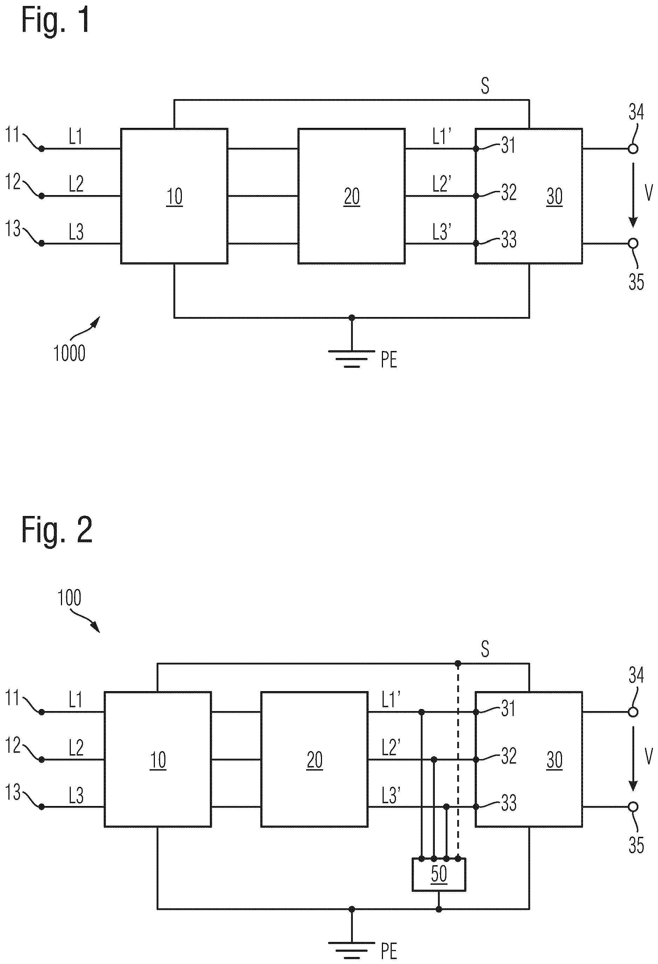

Figur 1 zeigt schematisch und exemplarisch ein Blockschaltbild eines Umrichterverbands 1000. An Netzanschlüssen L1, L2 und L3 eines Versorgungsnetzes wird ein dreiphasiges Wechselsignal L1, L2, L3 bereitgestellt. Dieses dreiphasige Wechselsignal L1, L2, L3, also die Netzspannung, ist einem Netzfilter 10 zugeführt. Dem Netzfilter 10 nachgeschaltet ist ein induktiver Kommutierungskreis 20, der ein gefiltertes dreiphasiges Wechselsignal L1', L2', L3' einem Umrichter 30 an seinen drei Phasenanschlüssen 31,32 und 33 bereitstellt.

Der Umrichter 30 wandelt dieses Wechselsignal L1', L2', L3' in ein Ausgangssignal V, und stellt das Ausgangssignal V an den Ausgangsanschlüssen 34, 35 bereit. Die Wandlungsfunktion erbringt der Umrichter 30 auf Basis einer leistungselektronischen Schaltung, in der mindestens ein Leistungshalbleiterschalter, wie ein MOSFET oder ein IGBT, mit einer Schaltfrequenz betrieben wird. Die Schaltfrequenz kann in Bereich einiger kHz liegen. Die vorliegende Erfindung ist jedoch auf keine bestimmte leistungselektronische Topologie des Umrichters 30 beschränkt.

Der Umrichter 30 ist beispielsweise ein rückspeisefähiger Gleichrichter, z.B. ein rückspeisefähiger Hochsetzsteller. Der Umrichter 30 erzeugt dann das Ausgangssignal V in Gestalt einer Gleichspannung, die deutlich über der Spannung liegt, die durch passive (also ungeschaltete) Gleichrichtung der Netzspannung L1, L2, L3 möglich wäre. Beispielsweise ist das Ausgangssignal V eine Gleichspannung von 650 V.

Dieses Ausgangssignal V kann einem (hier nicht dargestellten) Gleichspannungszwischenkreis zugeführt sein, dem ein weiterer Umrichter nachgeschaltet ist, der das Gleichspannungssignal des Gleichspannungszwischenkreises in ein Wechselsignal für einen Motor wandelt.

Ein von dem Umrichter 30 ausgebildeter Sternpunkt S ist an das Netzfilter 10 zurückgeführt. Das Netzfilter 10 und der Umrichter 30 sind an einen gemeinsamen Masseanschluss PE (Protective Earth) angeschlossen.

Eine Konfiguration, wie sie schematisch und exemplarisch in der Figur 1 dargestellt ist, ist beispielsweise aus der Offenlegungsschrift DE 10 2007 022 503 A1 bekannt.

Zur Verbesserung der elektromagnetischen Verträglichkeit ist gemäß der vorliegenden Erfindung bei dem in Figur 2 dargestellten Umrichterverband 100 ein zusätzliches Hochfrequenz-Netzfilter 50 vorgesehen. Abgesehen von dem Hochfrequenz-Netzfilter 50 kann der Umrichterverband 100 im Wesentlichen wie der der vorbekannte Umrichterverband 1000 ausgestaltet sein. Allerdings sind auch Ausführungsformen denkbar, bei denen der Kommutierungskreis 20 im Umrichter 30 implementiert ist.

Das Hochfrequenz-Netzfilter 50 ist bevorzugt "nah" am Umrichter 30 vorgesehen, da von diesem aufgrund des hochfrequenten Betriebs der leistungselektronischen Schalter die Störungen ausgehen, die nicht in das Versorgungsnetz eingekoppelt werden sollen.

Das Hochfrequenz-Netzfilter 50 ist an die drei Phasenanschlüsse 31, 32 und 33 des Umrichters 30 angeschlossen und koppelt diese an den Masseanschluss PE an. Das Hochfrequenz-Netzfilter 50 ist entweder gänzlich außerhalb des Umrichters 30 angeordnet, gänzlich im Umrichter 30 integriert, oder teilweise im Umrichter 30 integriert sowie teilweise außerhalb des Umrichters 30 ausgebildet.

Die nachstehenden Ausführungen beziehen sich auf einen dreiphasigen Umrichter, der ein dreiphasiges Wechselsignal von dem Versorgungsnetz empfängt bzw. ein dreiphasiges Wechselsignal in das Versorgungsnetz einspeist. Wie einleitend jedoch ausgeführt wurde, kann der Umrichter auch als einphasiger Umrichter ausgebildet sein oder als ein mehrphasiger Umrichter, der mehr oder weniger als drei Phasen empfängt bzw. bereitstellt.

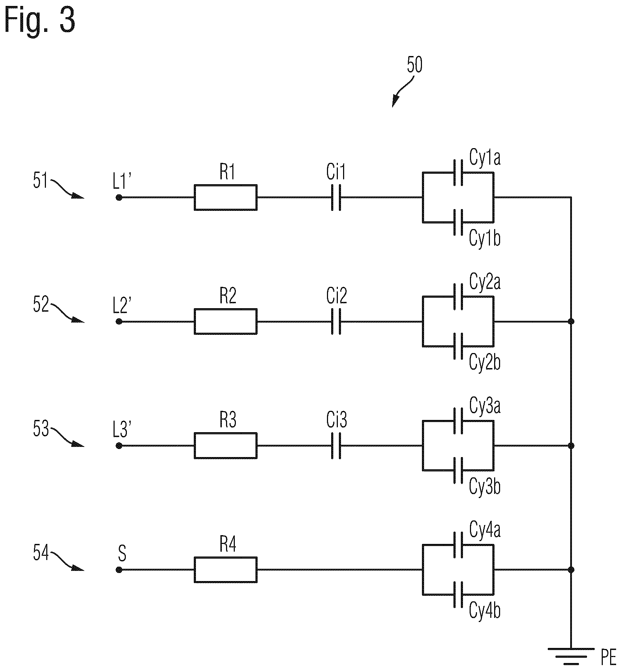

Eine beispielhafte Ausführungsform des Hochfrequenz-Netzfilters 50 wird nachstehend anhand der Figur 3 erläutert.

Gemäß der in der Figur 3 dargestellten, erfindungsgemäßen Ausführungsform umfasst das Hochfrequenz-Netzfilter vier Filterpfade 51 bis 54. Ein erster Filterpfad 51 bildet eine leitfähige Verbindung zwischen dem ersten Phasenanschluss 31 und dem Masseanschluss PE aus. Ein zweiter Filterpfad 52 bildet eine leitfähige Verbindung zwischen dem zweiten Phasenanschluss 32 des Umrichters 30 und dem Masseanschluss PE aus. Ein dritter Filterpfad 53 bildet eine leitfähige Verbindung zwischen dem dritten Phasenanschluss 33 des Umrichters 30 und dem Masseanschluss PE aus, und ein vierter Filterpfad 54 bildet eine leitfähige Verbindung zwischen dem Sternpunkt S und dem Masseanschluss PE aus. Im Falle eines einphasigen Umrichters würde der dritte Filterpfad 53 und auch der vierte Filterpfad 54 (falls kein Sternpunkt S vorhanden ist) entfallen. Dann wären nur der erste Phasenanschluss 31 über den erster Filterpfad 51 und der zweite Phasenanschluss 32 (der in diesem Fall z.B. das Signal eines Neutralleiters empfängt anstatt einer weiteren Phase; das einphasige Wechselsignal läge dann zwischen den Phasenanschlüssen 31 und 32 an) über den zweiten Filterpfad 52 an den Masseanschluss PE angeschlossen.

Die ersten drei Filterpfade 51-53 umfassen jeweils eine Serienschaltung aus einem impulsfesten Kondensator Ci1, Ci2, Ci3 und einer Parallelschaltung von mindestens zwei Y-Kondensatoren Cy1a-b, Cy2a-b, Cy3a-b.

Der vierte Filterpfad 54 enthält keinen impulsfesten Kondensator, jedoch eine Parallelschaltung von mindestens zwei Y-Kondensatoren Cy4a-b. Gemäß einer Ausführungsform sind alle Y-Kondensatoren Cy1a-b, Cy2a-b, Cy3a-b und Cy4a-b außerhalb des Umrichtergehäuses angeordnet und überbrücken eine Isolierung des Umrichters 30.

Jeder der vier Filterpfade 51-54 umfasst einen in Serie geschalteten ohmschen Dämpfungswiderstand R1, R2, R3, R4 mit einem Widerstandswert von einigen Ohm, beispielsweise im Bereich von 2 bis 8 Ohm oder 3 bis 7 Ohm. Der jeweilige Dämpfungswiderstand R1, R2, R3, R4 ist ausgebildet, eine Schwingung im Kilohertzbereich und im Megahertzbereich zu dämpfen. Er weist beispielsweise einen Widerstandswert von 4,7 Ohm auf.

Die Dämpfungswiderstände R1, R2, R3, R4 sind beispielsweise als impulsfeste Widerstände ausgebildet.

Die impulsfesten Kondensatoren Ci1 bis Ci3 haben jeweils eine Kapazität von einigen nF, beispielsweise 2,2 nF. Auch die Y-Kondensatoren Cy1a-b, Cy2a-b, Cy3a-b, Cy4a-b haben eine Kapazität von einigen nF, beispielsweise 3,3 nF.

Zur Reduzierung des Stroms durch einen jeweiligen Y-Kondensator Cy1a-b, Cy2a-b, Cy3a-b, Cy4a-b können in der jeweiligen Parallelschaltung auch mehr als zwei Y-Kondensatoren vorgesehen sein. Alle Y-Kondensatoren können darüber hinaus gleichartig sein und dieselbe Kapazität aufweisen.

Die Y-Kondensatoren Cy1a-b, Cy2a-b, Cy3a-b, Cy4a-b überbrücken zum Beispiel eine Isolierung des Umrichters 30. Aufgrund der hochfrequenten (Rechteck-)Impulse, die von dem Umrichter 30 ausgehen können, sind die impulsfesten Kondensatoren Cil-Ci3 vorgesehen. Da die Amplitude dieser Impulse am Sternpunkt S üblicherweise deutlich niedriger ausfällt als an den Phasenanschlüsse 31-33, wird im vierten Filterpfad 54 nicht zwingend ein impulsfester Kondensator benötigt.

In den ersten drei Filterpfaden 51-53 können Ströme einer Amplitude von bis zu einigen 10 A auftreten, wobei sich diese Ströme in den jeweiligen Parallelschaltungen auf die mindestens zwei Y-Kondensatoren Cy1a-b, Cy2a-b, Cy3a-b aufteilen. Im vierten Filterpfad 54 wird die auftretende Pulsenergie auf die mindestens 2 Y-Kondensatoren Cy4a-b verteilt. Somit können die Y-Kondensatoren Cy1a-b, Cy2a-b, Cy3a-b, Cy4a-b innerhalb ihrer Spezifikation betrieben werden.

Das Hochfrequenz-Netzfilter 50 erlaubt es, mit einem vergleichsweise geringen Aufwand von Bauteilen mögliche Rechteckimpulse von mehreren 100 V Amplitude und einer Frequenz von mehreren Kilohertz gegen Masse zu filtern. Insbesondere kann das Hochfrequenz-Netzfilter 50 ohne verschaltete Induktivitäten ausgebildet sein, und die durch die Rechteckspannungen erzeugten Pulsströme wiewohl begrenzen. Der durch einen einzelnen Y-Kondensator fließende Pulsstrom wird durch das Netzwerk von Kondensatoren auf mehrere Y-Kondensatoren verteilt und durch die Serienschaltung mit einem impulsfesten Kondensator und einem Dämpfungswiderstand begrenzt. Die zur Filterwirkung benötigte Gesamtkapazität kann durch die entsprechende Auswahl der einzelnen Kondensatoren erreicht werden.

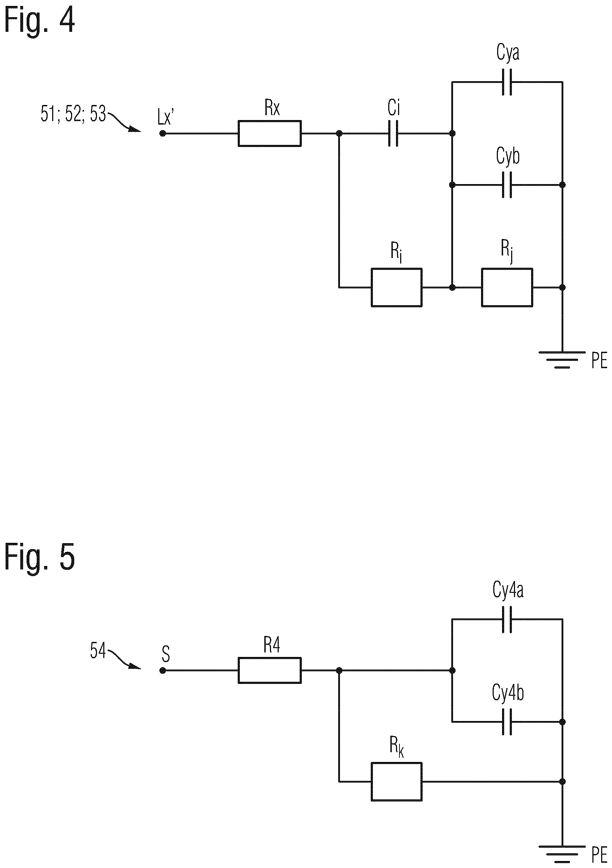

Optional können in den Filterpfaden 51-54 Entladewiderstände vorgesehen werden, was mit Bezug auf die Figuren 4 und 5 näher ausgeführt werden soll.

Figur 4 zeigt stellvertretend für die jeden der ersten Filterpfade 51, 52 und 53 einen Filterpfad mit solchen Entladewiderständen. Jeder der ersten drei Filterpfade 51, 52 und 53 kann entsprechend der Figur 4 ausgebildet sein. Der Parallelschaltung aus den mindestens zwei Y-Kondensatoren Cya, Cyb ist ein erster Entladewiderstand Rⱼ parallelgeschaltet, beispielsweise mit einem Widerstandswert im Bereich einiger 100 kΩ. Parallel zu dem Impulskondensatoren Ci ist ein zweiter Entladewiderstand Rᵢ geschaltet, beispielsweise mit einem Widerstandswert im Bereich einiger 100 kΩ.

In ähnlicher Weise kann im vierten Filterpfad 54 parallel zu den dort parallel geschalteten Y-Kondensatoren Cy4a-b einen Entladewiderstand Rₖ vorgesehen sein, beispielsweise mit einem Widerstandswert im Bereich einiger 100 kΩ._{.}

Die Entladewiderstände Rᵢ, Rⱼ und Rₖ sind jedoch nicht für die Filterwirkung des Hochfrequenz-Netzfilters 50 notwendig; ihre primäre Funktion liegt darin, die Kondensatoren, zu denen sie parallel geschaltet sind, nach der Trennung des Umrichterverbands 100 vom Netz zu entladen, so dass ein Benutzer, z.B. spätestens einige Minuten nach der Trennung von dem Netz, das Gehäuse des Umrichters 30 gefahrlos öffnen kann.

## Patentansprüche

1. Hochfrequenz-Netzfilter (50) für einen Umrichter (30), wobei der Umrichter (30) drei Phasenanschlüsse (31, 32, 33) zum Empfangen eines dreiphasigen Wechselsignals (L1', L2', L3') aus einem dreiphasigen Spannungsnetz (L1, L2, L3) aufweist und ausgebildet ist, das empfangene dreiphasige Wechselsignal (L1', L2', L3') in ein Ausgangssignal (V) für eine Last zu wandeln, wobei das Hochfrequenz-Netzfilter (50) umfasst:
- einen ersten Filterpfad (51) zur Ausbildung einer leitfähigen Verbindung zwischen einem ersten der drei Phasenanschlüsse (31) und einem Masseanschluss (PE);
- einen zweiten Filterpfad (52) zur Ausbildung einer leitfähigen Verbindung zwischen einem zweiten der drei Phasenanschlüsse (32) und dem Masseanschluss (PE); und
- einen dritten Filterpfad (53) zur Ausbildung einer leitfähigen Verbindung zwischen einem dritten der drei Phasenanschlüsse (33) und dem Masseanschluss (PE);
wobei das Hochfrequenz-Netzfilter (50) **gekennzeichnet ist durch**
- eine in jedem der drei Filterpfade (51, 52, 53) vorgesehene Serienschaltung aus einem impulsfesten, nicht für die Überbrückung einer Isolierung zugelassen Kondensator (Cil, Ci2, Ci3) und einer Parallelschaltung von mindestens zwei für die Überbrückung einer Basisisolation zugelassenen, nicht impulsfesten Y-Kondensatoren (Cyla-b, Cy2a-b, Cy3a-b),
- und **durch** einen vierten Filterpfad (54) zur Ausbildung einer leitfähigen Verbindung zwischen einem von dem Umrichter (32) ausgebildeten Sternpunkt (S) und dem Masseanschluss (PE), wobei der vierte Filterpfad (54) eine Serienschaltung aus einem ohmschen Dämpfungswiderstand (R4) und einer Parallelschaltung von mindestens zwei Y-Kondensatoren (Cy4a-b), aber keinen impulsfesten Kondensator aufweist.

2. Hochfrequenz-Netzfilter (50) nach Anspruch 1, wobei jeder der drei Filterpfade (51, 52, 53) einen ohmschen Dämpfungswiderstand (R1, R2, R3) mit einem Widerstandswert von 1 Ω bis 10 Ω aufweist, der in Serie zu dem impulsfesten Kondensator (Cil, Ci2, Ci3) geschaltet ist.

3. Hochfrequenz-Netzfilter (50) nach Anspruch 1 oder 2, wobei jeder der drei Filterpfade (51, 52, 53) einen zu den mindestens zwei Y-Kondensatoren (Cyla-b, Cy2a-b, Cy3a-b) parallelgeschalteten ersten ohmschen Entladewiderstand (Rⱼ) aufweist.

4. Hochfrequenz-Netzfilter (50) nach einem der vorstehenden Ansprüche, wobei jeder der drei Filterpfade (51, 52, 53) einen zu dem impulsfesten Kondensator (Cil, Ci2, Ci3) parallelgeschalteten zweiten ohmschen Entladewiderstand (Rᵢ) aufweist.

5. Hochfrequenz-Netzfilter (50) nach Anspruch 1, wobei der vierte Filterpfad (54) einen zu den mindestens zwei Y-Kondensatoren (Cy4a-b) parallelgeschalteten Entladewiderstand (Rₖ) aufweist.

6. Hochfrequenz-Netzfilter (50) nach einem der vorstehenden Ansprüche, wobei die impulsfesten Kondensatoren (Cil, Ci2, Ci3) eine jeweilige Kapazität im Bereich von 1 nF bis 10 nF aufweisen.

7. Hochfrequenz-Netzfilter (50) nach einem der vorstehenden Ansprüche, wobei die Y-Kondensatoren (Cyla-b, Cy2a-b, Cy3a-b, Cy4a-b) eine jeweilige Kapazität im Bereich von 1 nF bis 10 nF aufweisen.

8. Hochfrequenz-Netzfilter (50) nach einem der vorstehenden Ansprüche, wobei die parallel geschalteten Y-Kondensatoren (Cyla-b, Cy2a-b, Cy3a-b, Cy4a-b) jeweils die gleiche Kapazität aufweisen.

9. Hochfrequenz-Netzfilter (50) nach einem der vorstehenden Ansprüche, wobei das Hochfrequenz-Netzfilter (50) keine verschaltete Induktivität aufweist.

10. Umrichterverband (100), umfassend einen Umrichter (30) und ein an diesen angeschlossenes Hochfrequenz-Netzfilter (50) nach einem der vorstehenden Ansprüche.

11. Umrichterverband (100) nach Anspruch 10, weiter umfassend ein Netzfilter (10) zum Ausbilden einer Kopplung zwischen dem Spannungsnetz (L1, L2, L3) und den Phasenanschlüssen (31, 32, 33) des Umrichters (30).

12. Umrichterverband (100) nach Anspruch 10 oder 11, weiter umfassend einen induktiven Kommutierungskreis (20), der zwischen dem Netzfilter (10) und den Phasenanschlüssen (31, 32, 33) des Umrichters (30) angeschlossen ist.

13. Umrichterverband (100) nach einem der vorstehenden Ansprüche 10 bis 12, wobei ein von dem Umrichter (30) ausgebildeter Sternpunkt (S) an das Netzfilter (10) zurückgeführt ist und sowohl der Umrichter (30) als auch das Netzfilter (10) an den Masseanschluss (PE) angeschlossen sind.

14. Umrichterverband (100) nach einem der vorstehenden Ansprüche 10 bis 13, wobei der Umrichter (30) ein rückspeisefähiger Gleichrichter ist.

## Claims

1. High-frequency line filter (50) for a converter (30), wherein the converter (30) has three phase connections (31, 32, 33) for receiving a three-phase AC signal (L1', L2', L3') from a three-phase voltage grid (L1, L2, L3) and is designed to convert the received three-phase AC signal (L1', L2', L3') into an output signal (V) for a load, wherein the high-frequency line filter (50) comprises:
- a first filter path (51) for forming a conductive connection between a first of the three phase connections (31) and an earth connection (PE);
- a second filter path (52) for forming a conductive connection between a second of the three phase connections (32) and the earth connection (PE);
- a third filter path (53) for forming a conductive connection between a third of the three phase connections (33) and the earth connection (PE);
wherein the high-frequency line filter (50) is **characterized by**
- a series circuit composed of a pulse-proof capacitor (Cil, Ci2, Ci3), which is not permitted to bypass an insulation, and a parallel circuit of at least two non-pulse-proof Y capacitors (Cyla-b, Cy2a-b, Cy3a-b), which are permitted to bypass a basic insulation, the series circuit being provided in each of the three filter paths (51, 52, 53),
- and by a fourth filter path (54) for forming a conductive connection between a star point (S), which is formed by the converter (32), and the earth connection (PE), wherein the fourth filter path (54) comprises a series circuit composed of an ohmic damping resistor (R4) and a parallel circuit of at least two Y capacitors (Cy4a-b) but does not comprise a pulse-proof capacitor.

2. High-frequency line filter (50) according to Claim 1, wherein each of the three filter paths (51, 52, 53) comprises an ohmic damping resistor (R1, R2, R3) with a resistance value of 1 Ω to 10 Ω, which is connected in series with the pulse-proof capacitor (Cil, Ci2, Ci3).

3. High-frequency line filter (50) according to Claim 1 or 2, wherein each of the three filter paths (51, 52, 53) comprises a first ohmic discharge resistor (Rⱼ) connected in parallel with the at least two Y capacitors (Cyla-b, Cy2a-b, Cy3a-b).

4. High-frequency line filter (50) according to one of the preceding claims, wherein each of the three filter paths (51, 52, 53) comprises a second ohmic discharge resistor (Rᵢ) connected in parallel with the pulse-proof capacitor (Cil, Ci2, Ci3).

5. High-frequency line filter (50) according to Claim 1, wherein the fourth filter path (54) comprises a discharge resistor (Rₖ) connected in parallel with the at least two Y capacitors (Cy4a-b).

6. High-frequency line filter (50) according to one of the preceding claims, wherein the pulse-proof capacitors (Cil, Ci2, Ci3) have a respective capacitance in the range of from 1 nF to 10 nF.

7. High-frequency line filter (50) according to one of the preceding claims, wherein the Y capacitors (Cyla-b, Cy2a-b, Cy3a-b, Cy4a-b) have a respective capacitance in the range of from 1 nF to 10 nF.

8. High-frequency line filter (50) according to one of the preceding claims, wherein the Y capacitors (Cyla-b, Cy2a-b, Cy3a-b, Cy4a-b) that are connected in parallel each have the same capacitance.

9. High-frequency line filter (50) according to one of the preceding claims, wherein the high-frequency line filter (50) does not have a connected inductance.

10. Converter assembly (100), comprising a converter (30) and a high-frequency line filter (50) according to one of the preceding claims connected to said converter.

11. Converter assembly (100) according to Claim 10, further comprising a line filter (10) for forming a coupling between the voltage grid (L1, L2, L3) and the phase connections (31, 32, 33) of the converter (30).

12. Converter assembly (100) according to Claim 10 or 11, further comprising an inductive commutation circuit (20), which is connected between the line filter (10) and the phase connections (31, 32, 33) of the converter (30).

13. Converter assembly (100) according to one of the preceding Claims 10 to 12, wherein a star point (S), which is formed by the converter (30), is fed back to the line filter (10) and both the converter (30) and the line filter (10) are connected to the earth connection (PE).

14. Converter assembly (100) according to one of the preceding Claims 10 to 13, wherein the converter (30) is a rectifier with feedback capability.

## Revendications

1. Filtre de réseau à haute fréquence (50) destiné à un convertisseur (30), le convertisseur (30) comportant trois bornes de phase (31, 32, 33) destinées à recevoir un signal alternatif triphasé (L1', L2', L3') d'un réseau de tension triphasé (L1, L2, L3) et étant conçu pour convertir le signal alternatif triphasé reçu (L1', L2', L3') en un signal de sortie (V) destiné à une charge, le filtre de réseau à haute fréquence (50) comprenant :
- un premier chemin de filtre (51) destiné à former une liaison conductrice entre une première des trois bornes de phase (31) et une borne de masse (PE) ;
- un deuxième chemin de filtre (52) destiné à former une liaison conductrice entre une deuxième des trois bornes de phase (32) et la borne de masse (PE) ; et
- un troisième chemin de filtre (53) destiné à former une liaison conductrice entre une troisième des trois bornes de phase (33) et la borne de masse (PE) ; le filtre de réseau à haute fréquence (50) étant **caractérisé par**
- un circuit en série prévu dans chacun des trois chemins de filtre (51, 52, 53) et comprenant un condensateur (Cil, Ci2, Ci3), qui est anti-impulsions et qui n'est pas autorisé au pontage d'une isolation, et un circuit en parallèle comprenant au moins deux condensateurs en Y (Cyla-b, Cy2a-b, Cy3a-b) qui ne sont pas anti-impulsions et qui sont autorisés au pontage d'une isolation de base,
- et un quatrième chemin de filtre (54) destiné à former une liaison conductrice entre un point neutre (S), formé par le convertisseur (32), et la borne de masse (PE), le quatrième chemin de filtre (54) comportant un circuit en série, comprenant une résistance d'amortissement ohmique (R4), et un circuit en parallèle comprenant au moins deux condensateurs en Y (Cy4a-b), mais ne comprenant pas de condensateur anti-impulsions.

2. Filtre de réseau à haute fréquence (50) selon la revendication 1, chacun des trois chemins de filtre (51, 52, 53) comportant une résistance d'amortissement ohmique (R1, R2, R3) qui a une valeur de résistance de 1 **Ω** à 10 **Ω** et qui est montée en série avec le condensateur anti-impulsions (Cil, Ci2, Ci3).

3. Filtre de réseau à haute fréquence (50) selon la revendication 1 ou 2, chacun des trois chemins de filtre (51, 52, 53) comportant une première résistance de décharge ohmique (Rⱼ) montée en parallèle avec les au moins deux condensateurs en Y (Cyla-b, Cy2a-b, Cy3a-b).

4. Filtre de réseau à haute fréquence (50) selon l'une des revendications précédentes, chacun des trois chemins de filtre (51, 52, 53) comportant une deuxième résistance de décharge ohmique (Rᵢ) montée en parallèle avec le condensateur anti-impulsions (Cil, Ci2, Ci3).

5. Filtre de réseau à haute fréquence (50) selon la revendication 1, le quatrième chemin de filtre (54) comportant une résistance de décharge (Rₖ) montée en parallèle avec les au moins deux condensateurs en Y (Cy4a-b).

6. Filtre de réseau à haute fréquence (50) selon l'une des revendications précédentes, les condensateurs anti-impulsions (Cil, Ci2, Ci3) ayant une capacité respective dans la gamme allant de 1 nF à 10 nF.

7. Filtre de réseau à haute fréquence (50) selon l'une des revendications précédentes, les condensateurs en Y (Cyla-b, Cy2a-b, Cy3a-b, Cy4a-b) ayant une capacité respective dans la gamme allant de 1 nF à 10 nF.

8. Filtre de réseau à haute fréquence (50) selon l'une des revendications précédentes, les condensateurs en Y (Cyla-b, Cy2a-b, Cy3a-b, Cy4a-b) montés en parallèle ayant la même capacité.

9. Filtre de réseau à haute fréquence (50) selon l'une des revendications précédentes, le filtre de réseau à haute fréquence (50) ne comportant pas d'inductance montée.

10. Système convertisseur (100) comprenant un convertisseur (30) auquel est raccordé un filtre de réseau à haute fréquence (50) selon l'une des revendications précédentes.

11. Système convertisseur (100) selon la revendication 10, comprenant en outre un filtre de réseau (10) destiné à former un couplage entre le réseau de tension (L1, L2, L3) et les bornes de phase (31, 32, 33) du convertisseur (30).

12. Système convertisseur (100) selon la revendication 10 ou 11, comprenant en outre un circuit de commutation inductif (20) qui est raccordé entre le filtre de réseau (10) et les bornes de phase (31, 32, 33) du convertisseur (30).

13. Système convertisseur (100) selon l'une des revendications précédentes 10 à 12, un point neutre (S) formé par le convertisseur (30) étant ramené au filtre de réseau (10) et le convertisseur (30) ainsi que le filtre de réseau (10) étant raccordés à la borne de masse (PE).

14. Système convertisseur (100) selon l'une des revendications précédentes 10 à 13, le convertisseur (30) étant un redresseur régénératif.
